# EUROPEAN PATENT APPLICATION

(11) **EP 1 981 116 A1**
(43) Date of publication of application: **15.10.2008**
(21) Application number: 07253453.0
(22) Date of filing: 31.08.2007
(51) Int. Cl.: H01M 12/06, H01M 2/10, H02J 7/00

(54) **Portable power supply device**

(30) Priority: 06.04.2007 CN 200720143104 U
(71) Applicant: High Tech Battery Inc., Taishan Township T'ai pei 243 (TW)
(72) Inventor: Wang Chen, Kuei Yung, Taipei City 110 (TW)
(74) Representative: Johnson, Terence Leslie

(57) **Abstract**

A portable power- supply device in accordance with the present invention comprises at least one Zinc-Air battery module (2) composed of at least one battery unit and a power transmission interface (3). In an embodiment, the power transmission interface can be selected from a charging connector, a charging socket or a charging cable (3) with a linking connector (31). The portable power supply device (1) can be connected to a portable electronic device through the power transmission interface, and can be applied to be the main power or the backup charging power for the portable electronic device. In an embodiment, the battery unit can be a primary Zinc-Air battery, rechargeable Zinc-Air battery, Zinc-Air battery with replaceable zinc plate, or Zinc-Air battery with replaceable zinc gel, and supply the voltage from 0.8V to 24V for well power charging to the portable electronic device. The power transmission interface is coupled to at least one pair of conductors of the Zinc-Air battery module, and for transmitting electric current generated by the Zinc-Air battery module. The Zinc-Air battery module and the battery unit are simultaneously made of at least one flexible material through integrated molding. The module (2) is housed in a plastic member (1) composed of a top cover (11) and bottom cover (12). The top cover (11) has air vents (13) for allowing passage of air to an air cathode.

## Description

### FIELD OF THE INVENTION

The present invention relates to a portable power supply device, and more particularly to a portable power supply device which can be a main power or an emergency backup charging power.

### BACKGROUND OF THE PRESENT INVENTION

A rechargeable battery is often applied as power for portable electronic devices, such as Personal Digital Assistant (PDA), digital still camera (DSC), digital video camera (DV), note-book personal computer (NB), or cellular Phone. Therefore, it has high manoeuvrability in application which is not restricted by time or space.

However, a rechargeable battery for portable electronic devices is usually provided with less electric capacity and its electric capacity will be consumed as the operation time of portable electronic device increases. Because of the above reason, the shortcomings of portable electronic devices are limited by the electric capacity of a rechargeable battery and it is needed to judge whether to charge immediately or not. When it is not allowed to charge the battery of portable electronic devices immediately *in situ,* the portable electronic devices can not work because the power is exhausted.

In order to solve the problem that out of power for portable electronic devices, the known solution includes at present the following:
(1) Prepare a replaceable backup battery;
(2) Use the portable power supply device to be main power instead of rechargeable battery inside the portable electronic device;
(3) Use the portable power supply device to charge power to the rechargeable battery inside the portable electronic device;

For example, the U.S. patent 6,709,784 discloses one kind of backup battery charging device for a cellular phone. When a user exhausts power of a cellular phone, this backup battery charging device can be applied to charge the rechargeable battery inside the cellular phone in order to extend conversation time.

The conventional portable power supply device usually comprises a battery casket loaded with alkaline batteries or Ni/MH batteries. Compared with a Zinc-Air battery, the electric capacity of alkaline battery or Ni/MH battery is lower. The portable power supply device can comprise a large-scale battery, or more batteries connected in series or in parallel for obtaining higher electric capacity, but it results in an increase in weight and the volume of the battery casket. It is thus not convenient to carry this portable power supply device.

In addition, the conventional battery casket type portable power supply device is adopted to replace the battery after the battery is exhausted, and a user needs to buy a new battery to replace the exhausted battery. So using the conventional battery casket type portable power supply device to charge power results in relatively high costs, and is not an effective solution.

### SUMMARY OF THE PRESENT INVENTION

In order to overcome shortcomings of alkaline battery and Ni/MH battery in low capacity, environmental pollution of heavy metal, and poor efficiency of conventional battery casket type portable power supply device, the inventor of the present invention based on years of experience in the related industry to develop a new generation battery unit, such as the modularized Zinc-Air battery, with one power transmission interface, which has advantages of high electric capacity, environmental friendly, light weight, slim size and easy to carry. After experimenting repeatedly, it results in the development of the present invention "portable power supply device".

To achieve the foregoing objective, the present invention provides a portable power supply device comprising a Zinc-Air battery module and a power transmission interface.

The Zinc-Air battery module may have at least one battery unit, and the power transmission interface can be coupled to at least one pair of conductors of the Zinc-Air battery module and be used for transmitting electric current generated by the Zinc-Air battery module. More specifically, the Zinc-Air battery module and the battery unit can be simultaneously made of at least one flexible material through integrated molding.

The battery unit may further include an air cathode, a zinc anode, a separator and a mounting bracket. The zinc anode and the air cathode can be connected with the pair of conductors of the Zinc-Air battery module. The air cathode is prepared by carbon powder, a cathode electric current collector, PTFE (polytetrafluoroethylene) binder, and a catalyst. The zinc anode can be composed of zinc gel and an anode electric current collector, and zinc gel further includes zinc powder and electrolyte. The separator is used to prevent the air cathode from contacting the zinc gel to result in a short circuit. As mentioned-above the separator can be made of PP, PE or other polymer membrane, and has apertures such as fine apertures so that the electrolyte of zinc gel can infiltrate into the air cathode through the fine apertures of the separator. A mounting bracket could fasten the separator and the air cathode.

Besides, in one embodiment in accordance with the present invention, the battery unit of Zinc-Air battery module can be selected from primary Zinc-Air battery, rechargeable Zinc-Air battery, Zinc-Air battery with replaceable zinc plate, or Zinc-Air battery with replaceable zinc gel. Further, the Zinc-Air battery module can be a single Zinc-Air battery or multiple of Zinc-Air batteries incorporated with a regulator module, a booster module or a booster regulator to boost voltage of the Zinc-Air battery module. The advantage of incorporating with the booster module or the booster regulator can decrease complexity in designing the battery connected in serial or in parallel.

Besides, in another embodiment in accordance with the present invention, the Zinc-Air battery module supplies voltages from 0.8V to 24V. Preferably, the voltage is ranged from 1V to 20V.

Besides, in another embodiment in accordance with the present invention, the Zinc-Air battery module includes at least one protrusion or tenon to form at least a chamber for separating the battery unit and positioning the air cathode and the separator. When at least one chamber contained to the Zinc-Air battery module is formed, the battery unit can be formed by disposing a set of the air cathode, the zinc anode, the separator, and the mounting bracket into the chamber simultaneously. Moreover, the size and shaping of this mounting bracket can correspond to the chamber for beneficially inlaying and inserting to the chamber.

Besides, in another embodiment in accordance with the present invention, the mounting bracket has a trough to position the anode electric current collector.

Besides, in another embodiment in accordance with the present invention, the battery units can be connected in series or parallel through at least a pair of conductors to form the Zinc-Air battery module. Further, the flexible material can be a plastic material selected from POM (polyacetal), PPO (modified polyphenylene oxide), ABS (acrylonitrile butadiene styrene), PS (polystyene), PMMA (polymethyl methacrylate), PAE (polyamide elastomer), PP (polypropylene), PE (polyethylene) and EVA (ethylene vinyl acetate).

### BRIEF DESCRIPTION OF THE DRAWINGS

The invention is hereinafter described, by way of example, with reference to the accompanying schematic drawings, in which:-
Fig 1 is a three-dimensional view of portable power supply device in accordance with the present invention;
Fig 2 is a three-dimensional decomposition view of Zinc-Air battery module of a portable electronic device in accordance with the present invention;
Fig 3 is a cross-section view of a Zinc-Air battery module which is assembled;
Figs 4a-4h are schematic views of the horizontal arrangement of the battery unit of a Zinc-Air battery module of a portable power supply device in accordance with the present invention;
Figs 5a-5h are schematic views of a vertical stack of the battery unit 21 of a Zinc-Air battery module of a portable power supply device in accordance with the present invention;
Fig 6 is a schematic view of a portable power supply device in accordance with the present invention connecting with a portable electronic device through a power transmission interface;
Fig 7 is a schematic view of another embodiment of the power transmission interface of the portable power supply device in accordance with the present invention;
Fig 8 is a schematic view of another embodiment of the power transmission interface of the portable power supply device in accordance with the present invention; and
Fig. 9 is a schematic view of an embodiment of the Zinc-Air battery module of the portable power supply device incorporating with a booster regulator in accordance with the present invention

### DETAILED DESCRIPTION OF THE PREFERRED EMBODIMENTS

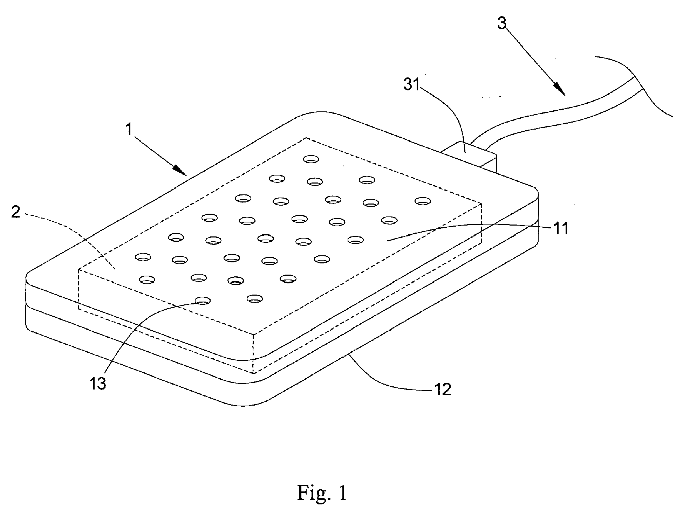

Referring to Fig.1 for a three-dimensional view of a portable power supply device in accordance with the present invention, the portable power supply device comprises a Zinc-Air battery module 2 and a power transmission interface 3. The Zinc-Air battery module 2 can be disposed on or carried by a plastic-member 1 composed of an under cover 12 and a top cover 11, as viewed. It should be noted that the plastic member is made of a flexible material (not shown in the figure). Since the electronic transmission interface 3 is coupled to at least one pair of conductors (not shown in Fig. 1) of the Zinc-Air battery module 2, the Zinc-Air battery module 2 can charge power for the portable electronic apparatus in an emergency when the power of the battery of the portable electronic apparatus is exhausted or is going to be exhausted.

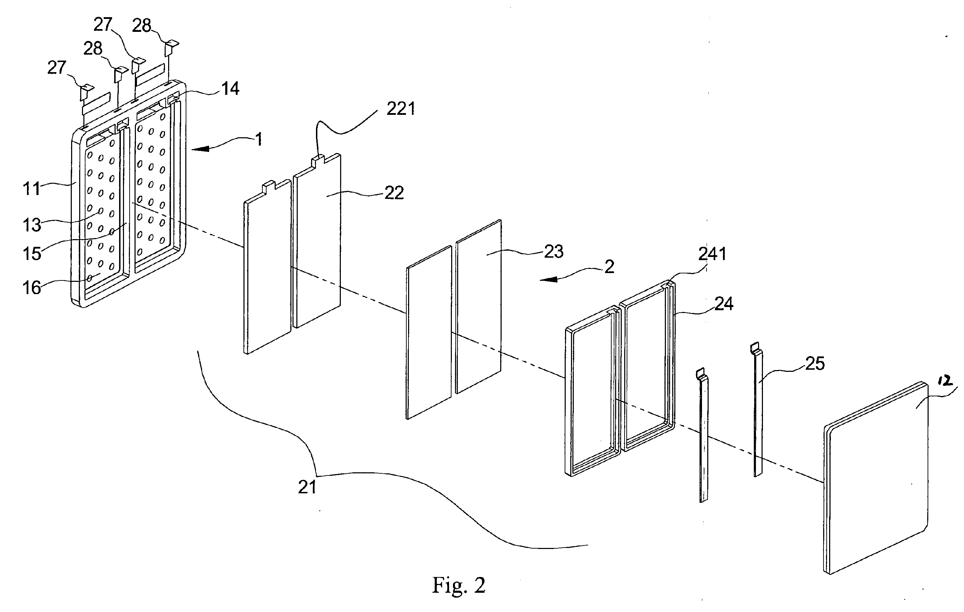

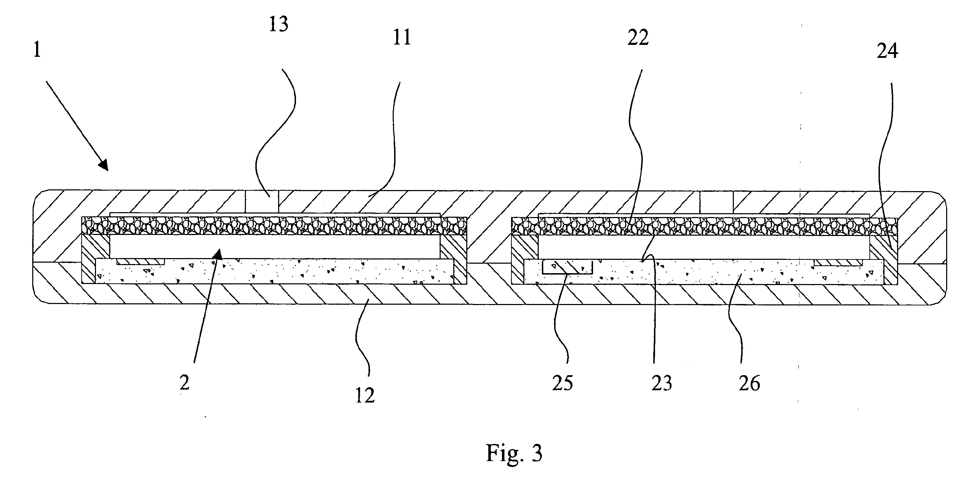

Referring to Fig. 2 and Fig. 3, the Zinc-Air battery module 2 comprises at least one battery unit 21 according to voltage to be outputted. The Zinc-Air battery module 2 and the battery unit 21 can be simultaneously made of at least one flexible material (not shown in the figure) through integrated molding. In the embodiment, the Zinc-Air battery module 2 is composed of two battery units 21 arranged in horizontal arrangement. Each battery unit 21 comprises an air cathode 22, a separator 23, a mounting bracket 24, an anode electric current collector 25 and zinc gel 26. The air cathode 22 and the zinc anode can be connected with two pairs of conductors 27, 28 of the Zinc-Air battery module 2. The air cathode 22 is preferably prepared by carbon powder, a cathode electric current collector, PTFE (polytetrafluoroethylene) binder, and catalyst (not shown in the figure). The zinc anode can be composed of zinc gel 26 and the anode electric current collector 25, and the zinc gel 26 includes zinc powder and electrolyte. The separator 23 can be formed by PP, PE or other polymer membrane and adjoined to the air cathode 22. The mounting bracket 24 is provided for fastening the separator 23 and the air cathode 22.

While assembling the battery unit 21, the air cathode 22 is disposed to the cover, such as inside the top cover 11, for forming the cathode. The top cover 11 has a plurality of air vents 13 that helps air to enter the plastic member 1 and to react with the air cathode 22. A projection or tenon 221 extends from the air cathode 22 and is connected with a tenon trough or aperture 14 formed on an inboard wall of the top cover 11 for positioning. The inboard walls of the top cover 11 has a partition, projection or tenon 15 for separating adjacent battery units 21 and forming at least one chamber 16 respectively, thereby accommodating and positioning each air cathode 22 and the separator 23.

The separator 23 is used to prevent the air cathode 22 from contacting the zinc gel 26 to result in a short circuit. As mentioned above, the separator 23 can be made of PP, PE or other polymer membrane, and has fine apertures so that the electrolyte of zinc gel 26 can infiltrate into the air cathode 22 through the fine apertures (not shown in the figure) of the separator 23.

The size and shape of the mounting bracket 24 corresponds to that of the chamber 16, so that the mounting bracket 24 can be inlaid into the chamber 16, and applied for pressing the separator 23 and the air cathode 22. As shown in the figure, the trough 241 is formed to a side of the mounting bracket 24 and used to position the anode electric current collector 25.

The zinc gel 26 is filled into the inboard of the under cover 12 to connect with the anode electric current collector 25. After two pairs of conductors 27 and 28 are connected in series and coupled to the power transmission interface 3, such as charging cable with a linking connector 31, a portable power supply device can be formed as shown in Fig.1.

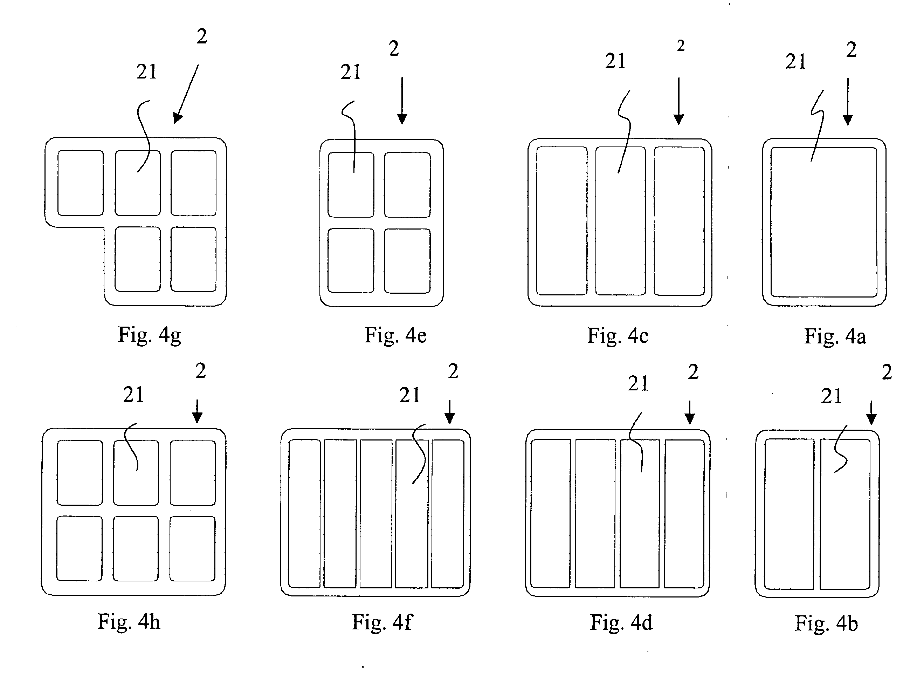

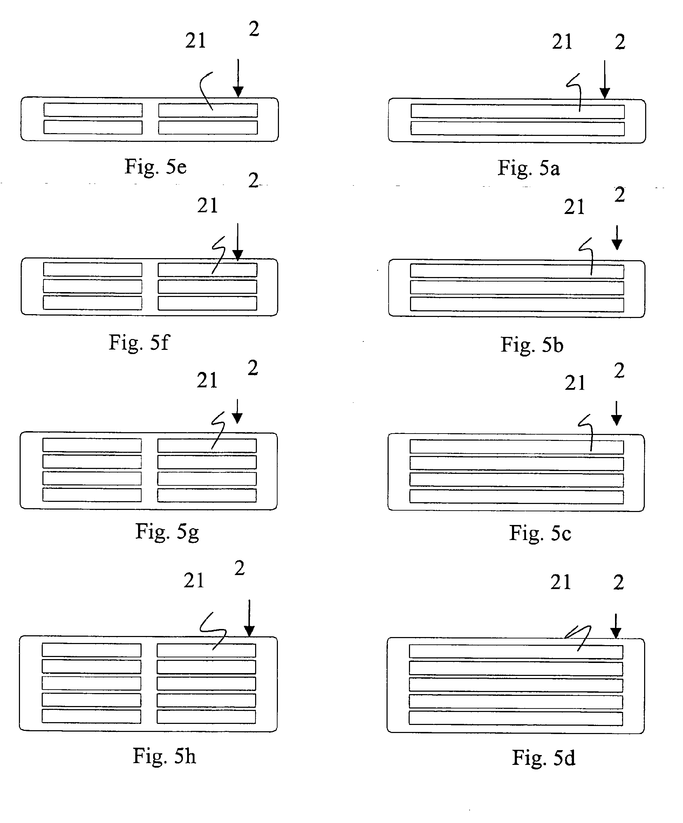

Referring to Fig. 4a to 4h and Fig. 5a to 5h for the schematic view of the horizontal arrangement and vertical stack of the battery unit 21 of Zinc-Air battery module 2 of the portable power supply device in accordance with the present invention respectively, the advantage of the horizontal arrangement of these battery units 21 is that it can reduce thickness of the portable power supply device, while on the other hand, the advantage of the vertical stack of the battery unit 21 is that it can reduce the area of the portable power supply device. The output voltage of the portable power supply device can adopt a plurality of battery units 21 connected in parallel or in series according to the voltage of the portable electronic device which is charged.

The battery unit 21 of the battery module 2 can be implemented by a primary Zinc-Air battery, a rechargeable Zinc-Air battery, a Zinc-Air battery with replaceable zinc plate, or Zinc-Air battery with replaceable zinc gel, and the battery module 21 can supply a voltage from 0.8V to 24V, the voltage preferably being in the range from 1V to 20V. The power transmission interface 3, such as a charging cable with a linking connector 31, is electrically connected with the zinc anode and the air cathode 22 of the Zinc-Air battery module 2 to transmit electric current to an external portable electronic apparatus (not shown in the figure). The portable power supply device in accordance with the present invention can be the main power source or the imperative chargeable power source of the portable electronic device with primary battery or rechargeable battery.

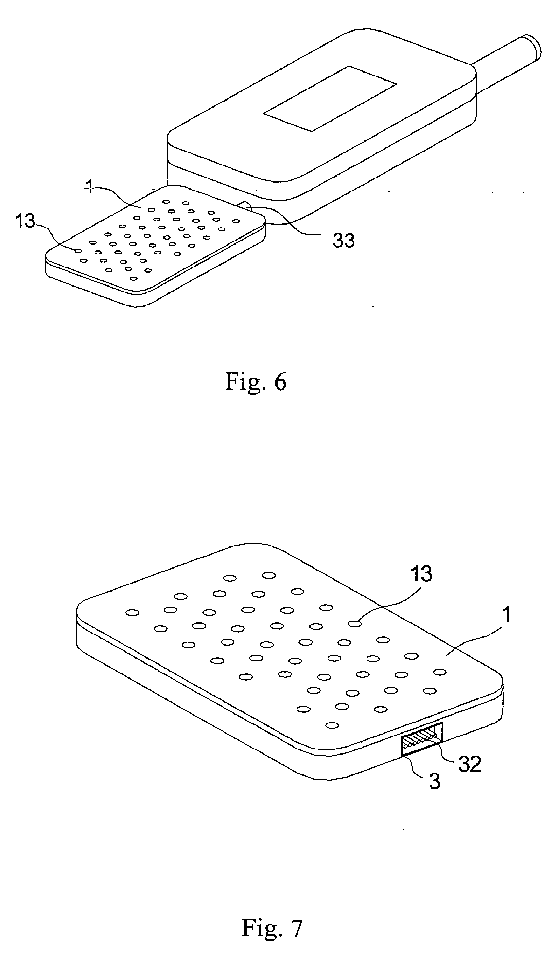

As shown in Fig 6, by utilizing a charging connector 33, the portable power supply device can output voltage from 0.8V to 24 V for supplying power to the portable electronic device, such as PDA, digital camera, digital video recorder, portable computer or mobile phone.

As shown in FIG. 7, the Zinc-Air battery module 2 and a power transmission interface 3 are built in the plastic member 1 of the portable power supply device, the difference between the power transmission interface 3 and the foregoing embodiment is that the power transmission interface 3 shown in FIG. 7 is a charging socket 32. The battery unit 21 of this battery module 2 is a primary Zinc-Air battery, a rechargeable Zinc-Air battery, a Zinc-Air battery with replaceable zinc plate, or a Zinc-Air battery with replaceable zinc gel, and the battery module 2 can supply the voltage from 0.8V to 24V, and the voltage is preferably in the range from about 1V to 20V. The charging socket 32 is electrically connected with the zinc anode and the air cathode of the Zinc-Air battery module 2 for transmitting electric current generated by the Zinc-Air battery module 2 through the power transmission interface 3. Accordingly, the portable power supply device can be the main power or the backup charging power for a portable electronic device with primary battery or rechargeable battery. Moreover, the flexible material for manufacturing the Zinc-Air battery module 2 and the battery unit 21 can be selected from POM (polyacetal), PPO (modified polyphenylene oxide), ABS (acrylonitrile butadiene styrene), PS (polystyene), PMMA (polymethyl methacrylate), PAE (polyamide elastomer), PP (polypropylene), PE (polyethylene) and EVA (ethylene vinyl acetate).

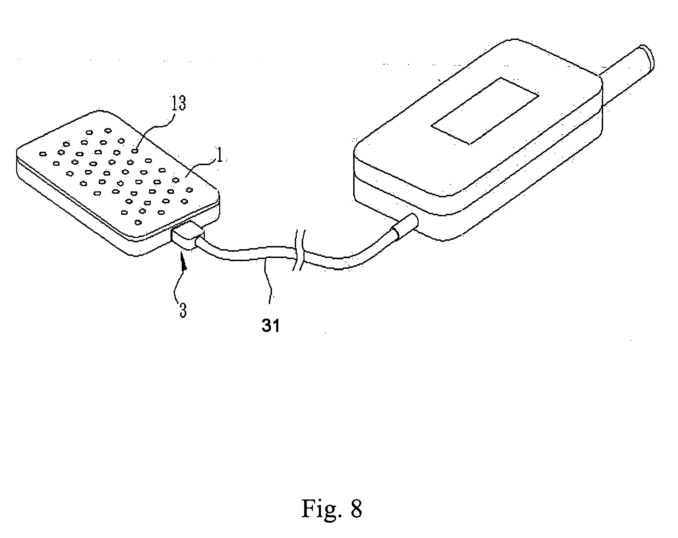

Referring to FIG 8 for a schematic view of another embodiment of a portable power supply device in accordance with the present invention, the Zinc-Air battery module unit 2 and a power transmission interface 3 are built in the plastic member 1 of the portable power supply device. The difference between the power transmission interface 3 and the foregoing embodiment is that the power transmission interface 3 shown in FIG. 8 comprises a charging cable with a linking connector 31. The battery unit 21 of this battery module 2 is a primary Zinc-Air battery, a rechargeable Zinc-Air battery, a Zinc-Air battery with replaceable zinc plate, or a Zinc-Air battery with replaceable zinc gel, and the battery module 2 can supply the voltage from 0.8V to 24V, and the voltage is preferably in the range from 1V to 20V. The charging cable with a linking connector 31 is electrically connected with the air cathode and the zinc anode of the Zinc-Air battery module 2 to transmit electric current of the Zinc-Air battery module 2 through the power transmission interface 3. Accordingly, the portable power supply device can be the main power or backup charging power for a portable electronic device with primary battery or rechargeable battery. In addition, the power transmission interface further 3 can have a battery monitor module (not shown in the figure) that monitors discharging voltage or remnant power of the Zinc-Air battery module 2 or regulates discharging voltage outputted from the Zinc-Air battery module 2.

The battery unit 21 of the portable power supply device in accordance with the present invention can adopt the Zinc-Air battery, such as primary Zinc-Air battery, rechargeable Zinc-Air battery, Zinc-Air battery with replaceable zinc plate, or Zinc-Air battery with replaceable zinc gel, and its range of voltage is set from 3.6V to 5.0V, and the electric capacity of the battery unit 21 is about 3000 mAh. The power supply of the general GSM cellular phone is usually the lithium ion rechargeable battery of 650 mAh, when the power of the lithium ion rechargeable battery is exhausted, adopt, the portable power supply device in accordance with the present invention can enable the GSM cellular phone totally charged 4 times, and its economic efficiency is quite excellent.

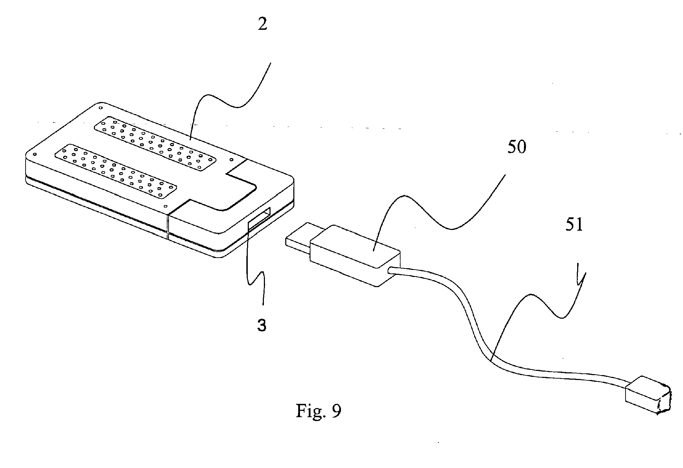

Further, the Zinc-Air battery module 2 can be single Zinc-air battery or multiple Zinc-Air batteries incorporated with a regulator module, a booster module or a booster regulator. The advantage of incorporating with the booster module or the booster regulator can boost voltages to decrease complexity in designing the battery connected in series or in parallel. For example, referring to Fig. 9 the schematic diagram illustrates the Zinc-Air battery module 2 incorporating a booster regulator 50 through the power transmission interface 3 between the Zinc-Air battery module 2 and the booster regulator 50, and the booster regulator 50 then is electrically connected to a portable electronic device (not shown in the figure) through a cable with a linking connector 51 so as to from a complete circuit. Only one battery with 1.5V can be boosted to become 5V by utilizing the booster regulator 50, thereby achieving the goal of the same power output.

According to the mentioned above embodiments, the portable power supply device in accordance with the present invention can overcome known drawbacks of conventional commercial portable power supply device designed by loading a standardized battery in a battery casket, and be a main power or an emergency charging power for a portable electronic device. Especially, the electric capacity of Zinc-Air battery module is higher than the general alkaline battery and Ni/MH battery. In addition, the Zinc-Air battery adopts pollution-free material, such as zinc powder and carbon powder, and can be termed a kind of green eco-friendly power source. Besides, the portable power supply device in accordance with the present invention can have a slim size based on a horizontal and/or vertical arrangement of those battery units. In addition to advantages of being light in weight, and small in size, the shape of the portable power supply device in accordance with the present invention can be diverse, not being limited to rectangular, in order to stimulate a desire to purchase among consumers.

While the invention has been described by way of example and in terms of a preferred embodiment, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

## Claims

1. A portable power supply device, comprising:
a Zinc-Air battery module having at least one battery unit, and
a power transmission interface coupled to at least one pair of conductors of said Zinc-Air battery module, and for transmitting electric current generated by said Zinc-Air battery module,
wherein said Zinc-Air battery module and said battery unit are simultaneously made of at least one flexible material through integrated molding.

2. A portable power supply device according to claim 1, wherein said battery unit further has a zinc anode and an air cathode that are connected with said pair of conductors of said Zinc-Air battery module, and said air cathode comprises carbon powder, a cathode electric current collector, PTFE (polytetrafluoroethylene) binder, and catalyst, said zinc anode is composed of zinc gel and an anode electric current collector, said zinc gel includes zinc powder and electrolyte, and said battery unit further includes a separator made of PP (polypropylene), PE (polyethylene) or other polymer membranes and adjoined to said air cathode.

3. A portable power supply device according to claim 2, wherein said battery unit further has a mounting bracket for fastening said separator and said air cathode, and the size and shape of said mounting bracket corresponds to said chamber for beneficially inlaying and inserting to said chamber, and said mounting bracket includes a trough or aperture for positioning said anode electric current collector.

4. A portable power supply device according to any preceding claim, wherein said battery unit is selected from the group comprising a primary Zinc-Air battery, rechargeable Zinc-Air battery, Zinc-Air battery with replaceable zinc plate, and Zinc-Air battery with replaceable zinc gel.

5. A portable power supply device according to any preceding claim, wherein said power transmission interface is selected from the group comprising a charging connector, a charging socket or a charging cable with a linking connector.

6. A portable power supply device according to any preceding claim, wherein said Zinc-Air battery module is a single Zinc-Air battery or multiple Zinc-Air batteries incorporated with a regulator module, a booster module or a booster regulator to boost voltage of said Zinc-Air battery module.

7. A portable power supply device according to any of claims 2 to 6, wherein said air cathode has a projection or tenon adapted to be fastened to or in a tenon trough or aperture.

8. A portable power supply device according to any preceding claim, wherein said Zinc-Air battery module has at least one partition or tenon adapted to define at least a chamber for separating said battery unit and positioning said air cathode and said separator.

9. A portable power supply device according to any preceding claim, wherein there is a plurality of said battery units are connected in series or parallel through at least a pair of conductors, thereby forming said Zinc-Air battery module.

10. A portable power supply device according to any preceding claim, wherein said flexible material is a plastic material selected from POM (polyacetal), PPO (modified polyphenylene oxide), ABS (acrylonitrile butadiene styrene), PS (polystyene), PMMA (polymethyl methacrylate), PAE (polyamide elastomer), PP (polypropylene), PE (polyethylene) and EVA (ethylene vinyl acetate).
